# EUROPEAN PATENT SPECIFICATION

(11) **EP 4 270 876 B1**
(45) Date of publication and mention of the grant of the patent: **04.03.2026**
(21) Application number: 22170333.3
(22) Date of filing: 27.04.2022
(51) Int. Cl.: H04L 12/14, H04M 15/00, H04W 4/24, H04M 15/02

(54) **METHODS AND APPARATUSES FOR CHARGING IN A COMMUNICATION NETWORK BY USING MDAS**
VERFAHREN UND VORRICHTUNG ZUR ABRECHNUNG IN EINEM KOMMUNIKATIONSNETZWERK UNTER VERWENDUNG VON MDAS
PROCÉDÉS ET APPAREILS DE FACTURATION DANS UN RÉSEAU DE COMMUNICATION EN UTILISANT MDAS

(43) Date of publication of application: 01.11.2023
(73) Proprietor: Nokia Technologies Oy, 02610 Espoo (FI)
(72) Inventor: SAMDANIS, Konstantinos, 81927 Munich (DE); RODRIGUES, Joao Antonio Pereira, 1600-097 Lisbon (PT)
(74) Representative: Page White Farrer

(56) References cited:
- WO-A1-2022/005349
- US-A1- 2021 021 494
- "3rd Generation Partnership Project; Technical Specification Group Services and System Aspects; Charging management; Network slice performance and analytics charging in the 5G System (5GS); Stage 2 (Release 17)", 30 March 2022 (2022-03-30), XP052147787, Retrieved from the Internet <URL:https://ftp.3gpp.org/3guInternal/3GPP_ultimate_versions_to_be_transposed/sentToDpc/28201-h00.zip 28201-h00.docx> [retrieved on 20220330]

## Description

### Field

The present application relates to methods and apparatuses for a wireless communication system.

### Background

A communication system may be a facility that enables communication sessions between two or more entities such as user terminals, base stations/access points and/or other nodes by providing carriers between the various entities involved in the communications path. A communication system may be provided, for example, by means of a communication network and one or more compatible communication devices. The communication sessions may comprise, for example, communication of data for carrying communications such as voice, electronic mail (email), text message, multimedia and/or content data and so on. Non-limiting examples of services provided comprise two-way or multi-way calls, data communication or multimedia services and access to a data network system, such as the Internet.

3GPP; Technical Specification Group Servicers and System Aspects; Charging Management; Network slice performance and analytics charging in the 5G System (5GS) specifies charging aspects of network slicing.

US2021/021494 A1 describes some examples of Management Data Analytics (MDA) relation with Self-Organizing Network (SON) functions and a coverage issues analysis use case.

### Summary

According to a first aspect there is provided an apparatus comprising a Management Data Analytics Service, MDAS, means for performing: providing a MDAS to a MDAS consumer; sending, to a charging function, a request to open a charging data record for the MDAS, wherein the request to open a charging data record for the MDAS comprises at least one information element describing the MDAS; receiving, from the charging function, a response confirming that the charging data record has been opened.

According to some examples, wherein the at least one information element comprises an indication of at least one of :CPU usage; storage requirements; and memory size needed to provide a result of the MDAS to the MDAS consumer.

According to some examples, the at least one information element comprises an indication of whether the charging data record is to be created after the MDAS is provided or while the MDAS is provided.

According to some examples, the at least one information element comprises an indication of whether the MDAS is to provide an output to the MDAS consumer in real-time, near real-time or not at real-time, or wherein the information element comprises an indication of the relative priority for producing an MDAS output.

According to some examples, the at least one information element comprises an indication that the MDAS consumer can monitor the data sources used to provide the MDAS.

According to some examples, the at least one information element comprises an indication of at least one of: an Artificial Intelligence model used to provide the MDAS; a Machine Learning model used to provide the MDAS.

According to some examples, the at least one information element comprises an indication of network conditions required for the MDAS to be provided.

According to some examples, the at least one information element comprises an indication of the type of management data analytics used in the MDAS.

According to some examples, the means are further configured to perform: updating the MDAS by at least one of: training an Artificial Intelligence model or a Machine Learning model used to provide the MDAS; validating an Artificial Intelligence model or a Machine Learning model used to provide the MDAS.

According to some examples, the means are further for: detecting a usage reporting trigger of the MDAS, and in response: sending, to the charging function, a request for an update of the charging data record, wherein the request to open a charging data record for the MDAS comprises at least one further information element describing the MDAS; receiving, from the charging function, a response confirming that the charging data record has been updated.

According to some examples, the means are further for: releasing the MDAS; sending, to the charging function, a request to terminate the charging data record wherein the request to open a charging data record for the MDAS comprises at least one further information element describing the MDAS; receiving, from the charging function, a response confirming that the charging data record has been terminated.

According to some examples, the means are further for: determining an amount of charging units to be used for the MDAS service; sending, in the request to open the charging data record, an indication of the determined amount of charging units; receiving, from the charging function, an indication that the charging data record is opened; monitoring the MDAS; terminating the MDAS before the determined amount of charging units is exceeded.

According to some examples, the means are further configured to perform, comprises, prior to sending, to the charging function, a request to open the charging data record for the MDAS: receiving, from a CEF, a request to subscribe to the MDAS; sending, to the CEF confirmation that the subscription is successful.

According to some examples the apparatus comprises an MDAS producer.

According to some examples the second apparatus comprises an MDAS consumer.

According to some examples the third apparatus comprises a CEF.

According to some examples, requests and responses sent between the apparatus and the charging function are sent via an MDAS interface and a CEF.

According to a second aspect there is provided an apparatus comprising a charging function , CHF, the apparatus comprising means for performing: receiving, from a MDAS producer, a request to open a charging data record for a Management Data Analytics Service, MDAS, provided from the MDAS producer to a MDAS consumer, wherein the request to open a charging data record for the MDAS comprises at least one information element describing the MDAS; opening the charging data record; sending, to the second apparatus, a response confirming that the charging data record has been opened.

According to some examples, the at least one information element comprises at least one of: an indication of at least one of CPU usage, storage requirements and memory size needed to provide a result of the MDAS to the MDAS producer; an indication of whether the charging data record is to be created after the MDAS is provided or while the MDAS is provided; an indication of whether the MDAS is to provide an output to the MDAS consumer in real-time, near real-time or not at real-time; an indication of the relative priority for producing an MDAS output an indication that the MDAS consumer can monitor the data sources used to provide the MDAS; an indication of at least one of an Artificial Intelligence model used to provide the MDAS, a Machine Learning model used to provide the MDAS; an indication of network conditions required for the MDAS to be provided; an indication of the type of management data analytics used in the MDAS.

An electronic device may comprise an apparatus as described herein.

In the above, various aspects have been described. It should be appreciated that further aspects may be provided by the combination of any two or more of the various aspects described above.

Various other aspects and further embodiments are also described in the following detailed description and in the attached claims.

According to some aspects, there is provided the subject matter of the independent claims. Some further aspects are defined in the dependent claims. The embodiments that do not fall under the scope of the claims are to be interpreted as examples useful for understanding the disclosure.

### Description of Figures

Embodiments will now be described, by way of example only, with reference to the accompanying Figures in which:
Figure 1 shows a schematic representation of a 5G system;
Figure 2 shows a schematic representation of a control apparatus;
Figure 3 shows a schematic representation of a terminal;
Figure 4 shows an example of a network;
Figure 5 shows an example of a network;
Figure 6 shows an example subscription method;
Figure 7 shows an example method;
Figure 8 shows an example method flow diagram;
Figure 9 shows an example method flow diagram;
Figure 10 shows a schematic representation of a non-volatile memory medium storing instructions which when executed by a processor allow a processor to perform one or more of the steps of the method of Figures 8 and 9.

### Detailed description

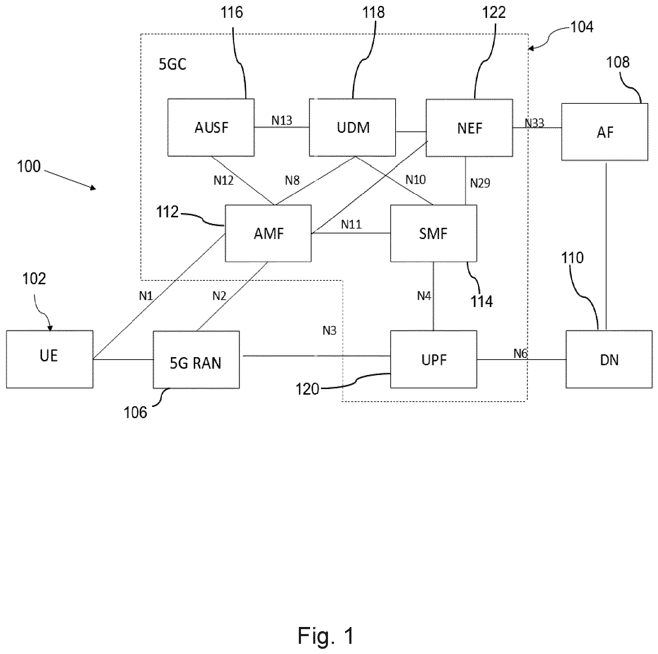

Before explaining in detail some examples of the present disclosure, certain general principles of a wireless communication system and mobile communication devices are briefly explained with reference to Figures 1 to 3 to assist in understanding the technology underlying the described examples.

In a wireless communication system 100, such as that shown in Figure 1, mobile communication devices/terminals or user apparatuses, and/or user equipments (UE), and/or machine-type communication devices 102 are provided wireless access via at least one base station (not shown) or similar wireless transmitting and/or receiving node or point. A communication device is provided with an appropriate signal receiving and transmitting apparatus for enabling communications, for example enabling access to a communication network or communications directly with other devices. The communication device may access a carrier provided by a station or access point, and transmit and/or receive communications on the carrier.

In the following certain examples are explained with reference to mobile communication devices capable of communication via a wireless cellular system and mobile communication systems serving such mobile communication devices.

Figure 1 shows a schematic representation of a 5G system (5GS) 100. Example methods and systems described herein may be implemented in a 5GS or any other suitable communication system. The 5GS may comprises a device 102 such as user equipment or terminal, a 5G access network (5G-AN) 106, a 5G core network (5GC) 104, one or more network functions (NF), one or more application function (AF) 108 and one or more data networks (DN) 110.

The 5G-AN 106 may comprise one or more gNodeB (gNB) distributed unit functions connected to one or more gNodeB (gNB) centralized unit functions.

The 5GC 104 may comprise an access management function (AMF) 112, a session management function (SMF) 114, an authentication server function (AUSF) 116, a user data management (UDM) 118, a user plane function (UPF) 120, a network exposure function (NEF) 122 and/or other NFs. Some of the examples as shown below may be applicable to 3GPP 5G standards. However, some examples may also be applicable to 4G, 3G and other 3GPP standards.

In a communication system, such as that shown in Figure 1, mobile communication devices/terminals or user apparatuses, and/or user equipments (UE), and/or machine-type communication devices are provided with wireless access via at least one base station or similar wireless transmitting and/or receiving node or point. The terminal is provided with an appropriate signal receiving and transmitting apparatus for enabling communications, for example enabling access to a communication network or communications directly with other devices. The communication device may access a carrier provided by a station or access point, and transmit and/or receive communications on the carrier.

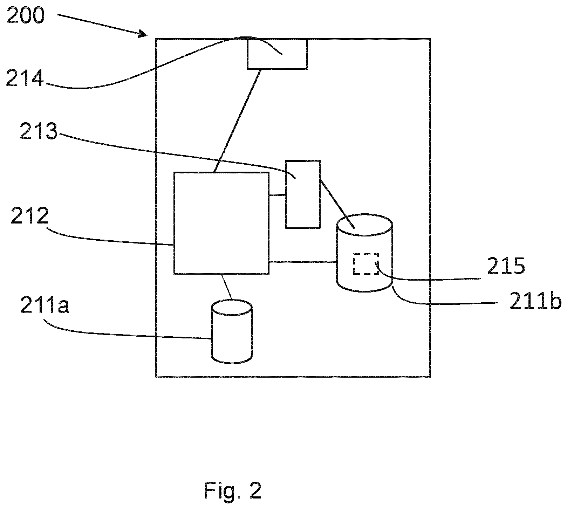

Figure 2 illustrates an example of a control apparatus 200 for controlling a function of the 5G-AN or the 5GC as illustrated on Figure 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5G-AN or the 5GC. In some examples, each function of the 5G-AN or the 5GC comprises a control apparatus 200. In alternative examples, two or more functions of the 5G-AN or the 5GC may share a control apparatus.

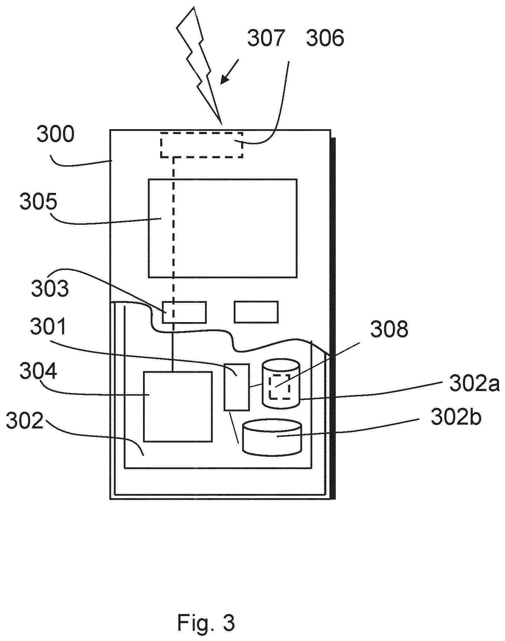

Figure 3 illustrates an example of a terminal 300, such as the terminal illustrated on Figure 1. The terminal 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a Cellular Internet of things (CIoT) device or any combinations of these or the like. The terminal 300 may provide, for example, communication of data for carrying communications. The communications may be one or more of voice, electronic mail (email), text message, multimedia, data, machine data and so on.

The terminal 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The terminal 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302a and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus may be provided on an appropriate circuit board and/or in chipsets. This feature is denoted by reference 304. The device may optionally have a user interface such as keypad 305, touch sensitive screen or pad, combinations thereof or the like. Optionally one or more of a display, a speaker and a microphone may be provided depending on the type of the device.

Management Data Analytics (MDA) provide an insight that assists decision functions or services. MDA may provide one or more of the following:
(i) numeric results related to statistics or predictions, e.g., average values, Cumulative Distribution Functions (CDF), etc.,
(ii) recommendation options, e.g., optimal target cell
(iii) root cause results.

Typically, MDA results are provided for a specific time frame and for particular target objects, for example: a management object - Distinguished Name (DN); an area of interest (e.g., a geographical area); a User Equipment (UE); a set of UEs; etc..

According to some examples, a method for charging MDA results towards an MDA MnS (Management Services) consumer is provided. In some examples, an interface for charging MDA results towards an MDA MnS consumer is provided.

It should be noted that throughout this specification, the terms Management Data Analytics Service (MDAS) and MDA MnS are equivalent and may be used interchangeably. Management Data Analytics Service (MDAS) may comprise the services exposed by the MDA. MDAS can be consumed by various consumers, for example and without limitation: Management functions MnFs (i.e., MnS producers/consumers for network and service management), Network Functions NFs (e.g., NWDAF), SON functions, network and service optimization tools/functions, SLS assurance functions, human operators, and AFs, etc.

The MDA output is provided by the MDAS producer to the corresponding MDAS consumer that requested the analytics. An MDAS output provided by an MDAS producer can be consumed by any entity (any MDAS consumer) with appropriate authorisation and authentication.

Examples provide methods for charging MDA results towards an MDAS consumer. Examples describe conditions and events that can help the charging engine charge the MDA results to the MDAS consumer. The conditions may be characterized considering the processing effort that is needed, the complexity of algorithm involved, the effort to collect input data as well as the urgency, type and amount of output data needed by the MDA MnS consumer. The events can include a conventional time schedule, threshold level, e.g., load level, number and type of managed objects (DSs) involved, e.g. base stations, slices, etc., UE movement, i.e. mobility, and number of UEs.

In some examples there is also provided a method to allow the MDA MnS consumer to control the type and amount of charging.

In some examples there is also provided a method to trigger Analytics Charging of an end-to-end network Slice with different domains/technologies (Core/Radio/Transport). Currently, the input provided for the Analytics Charging is only available through NWDAF (Core Domain).

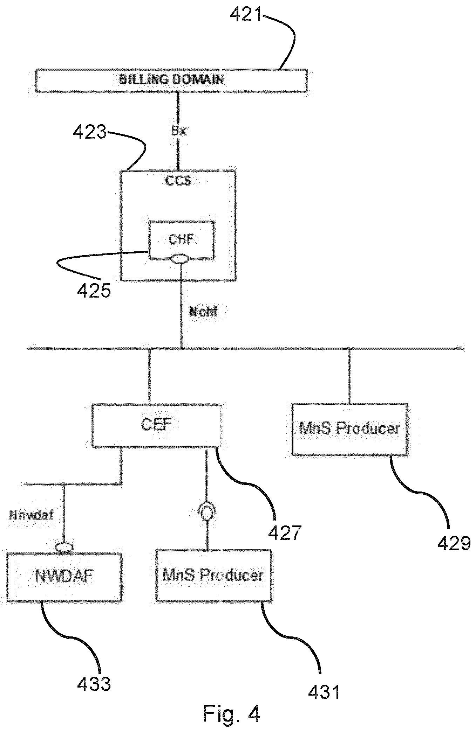

Charging Analytics is considered in 3GPP TS 32.240 (section 4.2.4), however this focuses only on the Core network domain. Such an example architecture is shown in Figure 4. Billing Domain 421 is connected via a Bx interface to Converged Charging System (CCS) 423. CCS 423 comprises Charging Function (CHF) 425.

In the example of Figure 4, CHF is connected via an Nchf interface to Charging Enablement Function (CEF) 427 and MnS Producer 429. CEF 427 is connected to Network Data Analytics Function (NWDAF) 433 via a Nnwdaf interface. CEF 427 is also connected to MnS producer 431. Charging architecture for the Management Domain is supplied using NWDAF 433 in Figure 4.

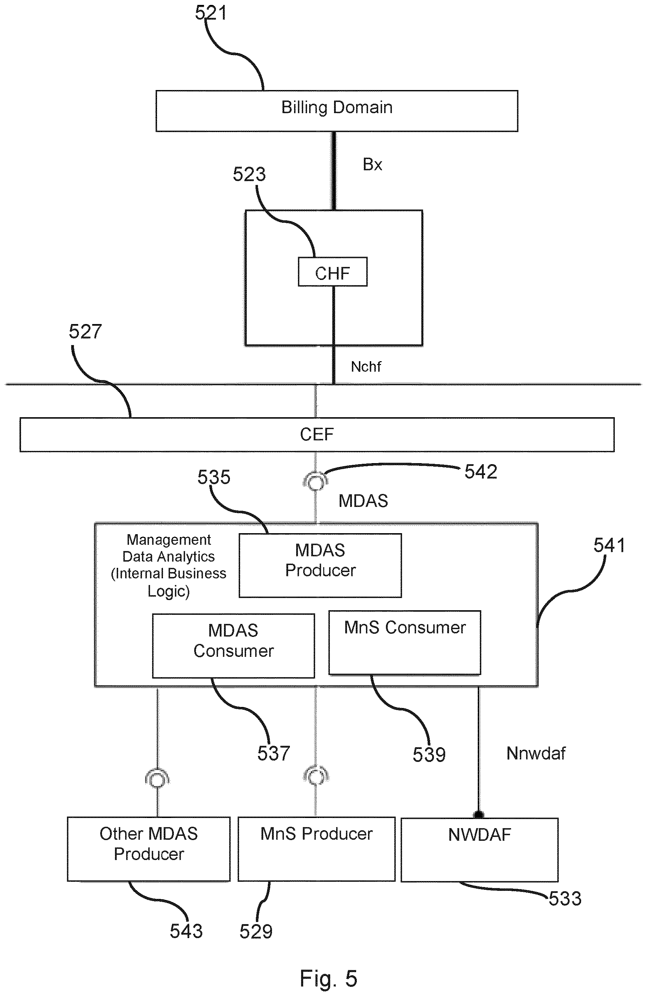

Figure 5 shows an example that uses Management Data Analytics (MDA) 541. MDA 541 comprises Management Data Analytics Service (MDAS) Producer 535 and one or more MDAS Consumer such as MDAS Consumer 537 and MDAS Consumer 539.

MDA 541 is connected to CEF 527 via an MDAS interface 542. CEF 527 is connected to CHF 523 via Service based architecture. CHF 523 is connected to the Service Based architecture via an Nchf interface. CEF 527 is connected to Billing Domain 521 via a Bx interface.

MDA 541 is connected to MnS Producer 529, NWDAF 533 (via an Nnwdaf interface) and an Other MDAS Producer 543.

MDA use cases, MDA frameworks and MDA capabilities (including request and reporting) are discussed in 3GPP TS 28.809 and 3GPP TS 28.104. 3GPP TS 32.240 describes generic charging principles, and 3GPP TS 28.201 describes charging for analytics in the control plane (i.e. NWDAF including certain conditions for triggering an event, i.e., time schedule, threshold based and number of notify events). 3GPP TS 28.201 also describes a charging process for analytics.

According to some examples, an MDAS interface 542 towards the charging system (CEF 527, CHF 523, Billing Domain 521, etc.) is used to charge for management data analytics. MDAS charging interface 542 can be used to capture conditions related to analytics and can be used to create charging items with respect to at least one of: events; sessions; a mix of events and sessions. Charging items for a mix of events and sessions are described in 3GPP TS 32.290.

Capturing conditions related to analytics and creating charging items may be taken into account using the MDAS charging interface 542 and by considering at least one of, for the MDAS:
- **Processing** - the intensity of the required task that is being charged for in terms of one or more of: CPU; storage; RAM; energy consumption. In some examples Performance Management (PM) from 3GPP TS 28.552 may be used for charging;
- **Type of analytics** - the use case, i.e. the analytics capability. The use case may can be a continuous process, for example to make sure of an assurance goal, or on demand, for example prediction of a NF load. An on-demand request may be considered to comprise a request where a consumer needs an analytics result when the consumer makes the request;
- **AI/ML Model or Algorithm** - different AI/ML algorithms used for MDAS may introduce distinct charging. This may reflect the complexity in the deployment or the advance features of an algorithm;
- **AI/ML Model version** - a newer version may be more expensive;
- **AI/ML Model maintenance** - life cycle management processes including training, validation, etc. Different algorithms may require different preparation effort, e.g. training, which may be related to a specific use case;
- **Input data** - the type of sources, e.g., gNB, NF, Slice MnS, etc., may be considered. In some examples, the load that is created in the network, i.e. how much effort is needed to collect such input may also be considered;
- **Trouble-shooting capabilities** - the requirement to keep track of the sources of data, e.g., to locate faults, may be considered;
- **Urgency or respond time** - an assurance in delivery within a certain time frame may be considered. In other words, how fast the analytics are required or what type of prioritization for the analytics is needed may be considered;
- **Analytics target** - the volume and type of managed objects (e.g., gNBs, number of UEs, a certain geographical) may be considered;
- **Analytics time window** - the duration of the MDA report may be considered, this may be a time window in the past for statistics or in the future for prediction, e.g., prediction of load for next 10 mins;
- **Type of results** - the type of results may be considered (e.g., the statistics based on formulas, the predictions derived from rules or algorithm logic, the recommendations that also contain decision logic the root cause (correlation));
- **UE conditions** - for example movement, i.e., mobility, connectivity, etc. may be considered;
- **Network conditions** - may be considered, this may be threshold based and may include, for example network load.
- **Amount of output data** - size of file(s), stream(s) or notification(s) may be considered.

In some examples, Post Event Charging (PEC) may be used where the MDA consumer interacts with the CHF after the service is delivered. This may be considered to be offline charging.

In some examples, events may be charged immediately i.e., online as the service is offered.

In some examples, offline and online charging may be combined to provide converged charging.

Furthermore, charging can also take into account certain MnS capabilities such as the type of control of the MDA results, e.g., modifying any of the respective attributes listed above taking into account the need for further algorithm training, validation, etc.

Some examples provide a possibility of end-to-end charging, considering the RAN, 5GC and transport network, taking into account the introduction of the integration between CEF and the MDAS as specified in 3GPP TS 32.240.

Some MDA use cases are specified in 3GPP TS 28.104.

According to some examples, analytics outputs may be provided to a CHF through a CEF from an MDA.

According to some examples, the following use cases can be provided by an MDA:
- Resource consumption analysis: Information provided on resource usage which supports a network slice. This information can come from different technology domains (i.e. Core, Radio, Transport, Edge). Charging can be performed for example, based on at least one of: the service provided; the resources used.
- Service experience analysis enhancement: Attributes which can be used to enable an improved QoE to CHF which enable either a more accurate quota granting or precise rating group (e.g. associating energy consumed by the resources)
- Network Slice Charging prediction: This would give a better view on how a network slice could be charged, by forecasting the consumption and predicting the cost of such a service consumption. This can support the possibility of using resources coming from third parties' infrastructures (e.g., local breakouts, non-terrestrial networks (NTN) infrastructure)

According to some examples, MDAS Interface 542 can be used for offline charging. Offline charging may include, for example, event-based, session-based or a mix of event-based and session-based charging. A Charging Data Request and/or a Charging Date response or offline charging may include one or more attributes. These attributes are described in the following paragraphs.

In some examples, the attributes may include an attribute indicating processing effort for providing the MDA results. This may include one or more of CPU usage, RAM usage, storage required, consumed energy, any of the PMs in 3GPP TS 28.552.

In some examples, the attributes may indicate the type of analytics used in the MDA results. In some examples, the attributes may indicate an AI/ML Model used. In some examples, the attributes may indicate a type of result in the MDA results for example: statistics, predictions, recommendations, a combination of a plurality of types of result.

In some examples, the attributes may indicate a category of input data used for the MDA results. For example, the data may be indicated as proprietary, may be from a specific group, may related to certain one or more specific geographical areas or one or more managed target objects, etc.

In some examples, the attributes may indicate a time of response or prioritization that describes a required urgency of providing the MDA results. Different times frames can be considered for charging, e.g., real-time, near real-time or non-real time. Alternatively an indicated time waiting duration X may be indicated, e.g., a time waiting duration of 2 minutes.

In some examples, the attributes may indicate a size in, e.g., MBs, or amount of reports or notification updates for the MDA results. For example, the attributes may indicate a number of reports or notification updates, of analytics output data; (a notification update can assist in a case where an MDAS producer indicates that certain fields related to an MDA output are updated so the MDAS consumer may fetch such new data either from the MDAS producer or from a data server that stores analytics output data.

In some examples, the attributes may indicate network and UE conditions upon which the MDA results are provided e.g., upon UE movement, load threshold, etc.

In some examples, the attributes may indicate whether trouble shooting information is provided in the MDA report i.e. if the MDAS consumer is enabled to identify a source of potential errors in the MDA report.

In some examples, the attributes may indicate whether maintenance capabilities enable the MDA consumer to request AI/ML Model retraining.

According to some examples, MDAS Interface 542 can be used for online charging. Online charging may be used for immediate charging. Online charging can be used for Event-based or Session-based charging. An Online Charging Data Request and Response may include any of the attributes indicated above for offline charging when certain circumstances are met (for example, reporting conditions related to a network, managed target objects or UEs) and/or when certain conditions are changed by request of an MDA consumer (for example, urgency of delivering a report or an immediate report request).

Converged charging may combine both offline and online charging.

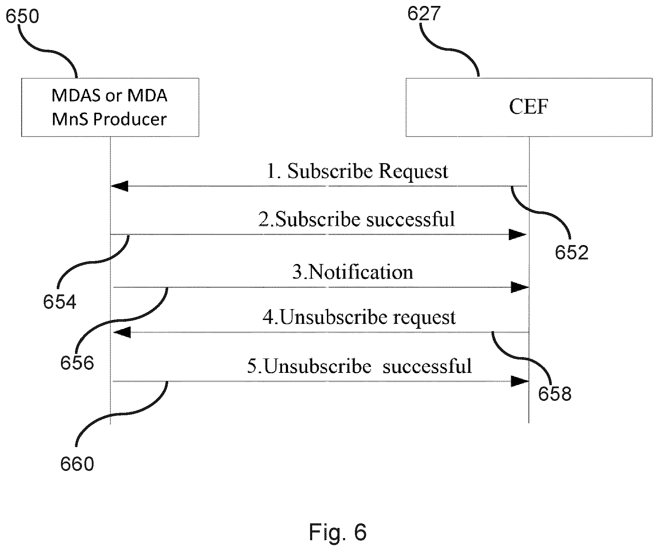

Figure 6 shows an example method that may be performed between an MDAS Producer 650 (such as MDAS Producer 535 of Figure 5) and a CEF 627 (such as CEF 527 of Figure 5). CEF 627 may subscribe/unsubscribe at MDAS Producer 650 to be notified on performance and analytics information. MDAS Producer 650 and CEF 627 may use Mdas_AnalyticsSubscription service for a Network Slice to subscribe/unsubscribe at MDAS Producer 650 to be notified on performance and analytics information.

At 652, CEF 627 determine to start the collection of performance and analytics information and subscribes to performance a Subscribe Request is sent from CEF 627 to MDAS Producer 650. In some examples, the request sent at 652 may comprise a performance indicator (for example load level per Single-Network Slice Selection Assistance Information (S-NSSAI)). In some examples, the request sent at 652 may comprise a Network Slice Identifier, which may comprise a S-NSSAI for example. In some examples, the request sent at 652 may comprise a subscription condition, for example a start time and an end time.

At 654, MDAS producer 650 sends a Subscription Response to CEF 627 to indicate that the Subscribe Request sent at 652 was successful.

At 656, based on the subscription of performance and analytics information at 652 and 654, MDAS Producer 650 notifies CEF 627 with the performance and analytics information. The notification sent at 656 may comprise one or more notifications.

At 658, CEF 627 sends an Unsubscribe Request to MDAS Producer 650 to cancel the subscription to performance and analytics information.

At 660, MDAS Producer 650 responds to CEF 627 to indicate that the subscription was successful.

CEF 627 may update the subscription during the duration of the subscription. Updating the subscription may comprise, for example, updating a Network Slice Identifier. In some examples, a Network Slice Identifier may comprise a Single-Network Slice Selection Assistance Information (S-NSSAI). In some examples, updating the subscription may comprise updating a subscription condition, for example a start time and an end time of the subscription.

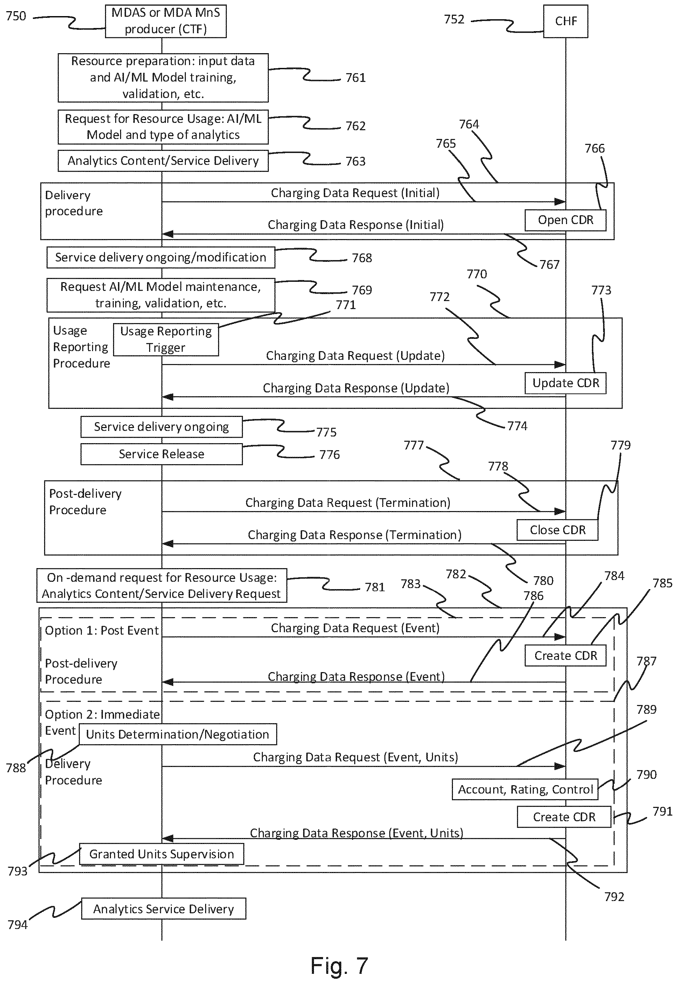

According to some examples, a MDAS (MDA MnS) Producer such as MDAS Producer 535, MDAS Producer 650 or MDAS Producer 750 can create events. A first exemplary type of event that an MDAS Producer can create is a preparation event. Preparation events may include input data collection by the MDAS Producer. The input data collection may be used to train an AI/ML model. Preparation events may include instantiation of an AI/ML inference. Preparation events may include validation of an AI/ML inference. An example of this first type of event is shown at 761 of Figure 7.

A second exemplary type of event that an MDAS Producer can create is a request for analytics. A request for analytics may indicate a particular type of analytics i.e., may indicate a use case. For example, the request for analytics may indicate: a slice feasibility or throughput prediction; a PM/KPI statistics or prediction; a request for modification of any of the analytics parameters, i.e., conditions related to when MDA output shall be delivered. Examples of this second type of event are shown at 762 and 781 of Figure 7.

A third exemplary type of event that an MDAS Producer can create is an AI/ML model maintenance request, i.e., request for re-training, validation, etc. An example of this third type of event is shown at 769 of Figure 7.

Figure 7 shows an example method that may take place at an MDAS producer (Charging Trigger Function (CTF)) 750 and a CHF 752. Figure 7 shows an example method including both offline and online charging scenarios for MDA.

It should be noted that the operations performed in the method of Figure 7 need not be performed in order. For example, 782 could be performed 777 or 770.

Information sent between MDAS producer 750, and CHF 752 in Figure 7 may be sent via an MDAS interface (such as MDAS interface 542 of Figure 5) and a CEF (such as CEF 527 in Figure 5).

In some examples, the method of Figure 7 may take place during the subscription period of Figure 6.

761 to 780 show session-based charging for MDA. Session based MDA can be used to provide a series of analytics outputs or reports.

At 761, MDAS producer 750 may perform a resource preparation event. This may comprise using input data to produce an MDA output. This may also comprise AI/ML Model training and/or AI/ML Model validation.

At 762, MDAS producer 750 may perform a MDA request for resource usage for an analytics calculation. From a charging view, it may be desired to charge for the use of these resources. This may comprise using a request to use an AI/ML model. The request may indicate the type of AI/Model to be used. The request may also indicate a type of analytics to be used.

At 763, MDAS producer 750 may perform analytics content/service delivery. This may be provided to an MDAS consumer. The analytics content/service delivery may be based on at least one of the events at 761 and 762.

A charging procedure for at least one of 761, 762 and 763 is performed at 764. In the example of Figure 7, CHF 752 does not have a currently open Charging Data Record (CDR) for MDAS producer 750. At 765, MDAS producer 750 sends an initial charging data request to CHF 752. At 766, CHF 752 opens a CDR for MDAS producer 750. At 767, CHF 752 sends an initial charging data response to MDAS producer 750 indicating a CDR for MDAS producer 750 has been opened.

At 768, the analytics content/service delivery from 763 is ongoing. In some examples, at 768 the analytics content/service delivery from 763 may be modified. For example, an AI/ML model used by MDAS Producer 750 may be changed or re-trained. At 769, MDAS producer 750 may perform a request for at least one of AI/ML model maintenance, training, validation. This may comprise using a request to use an AI/ML model. The request may indicate the type of AI/Model to be used. The request may also indicate a type of analytics to be used.

At 771, a charging update procedure is performed. This may include updating a CDR of MDAS producer 750 with charging information of at least one of 768 and 769. At 772, MDAS producer 750 sends an update charging data request to CHF 752. At 773, CHF 752 updates the CDR for MDAS producer 750. At 774, CHF 752 sends an update charging data response to MDAS producer 750 indicating the CDR for MDAS producer 750 has been updated. The update may include charging information on any of 768, 769.

It should be noted that modification 768 may cause further charging events depending on the modification of the MDA request, e.g., if MDA is requested for a greater geographical area may cause a bigger size MDA output.

At 775, MDAS service delivery by MDAS producer 750 may be ongoing. At MDAS producer 750 releases the MDAS service. 777 shows a procedure for closing a CDR of MDAS producer 750 after the MDAS service is released.

At 778, MDAS producer 750 sends a termination charging data request to CHF 752. At 779, CHF 752 opens a CDR for MDAS producer 750. At 780, CHF 752 sends a termination charging data response to MDAS producer 750 indicating the CDR for MDAS producer 750 has been closed. The CDR may be updated with information from 775 and 776 before being closed.

781 to 794 shows event-based charging for MDA producer 750. This may be considered to be "on-demand" charging. Two options are provided at 782 for events-based charging as 783 and 787. 783 shows an offline (post-event) option. 787 shows an online (immediate) option.

For the offline option 783, after the event indicated in request 781 a charging data request for the event is sent at 784 from MDA producer 750 to CHF 752. The request may indicate information about the event, for example CPU usage, storage requirements, communications resource usage, etc.. At 785, CHF 752 creates a CDR for the MDAS producer for the event. At 786, CHF 752 sends a charging data response to MDAS producer 750 indicating that the CDR has been created. Analytics service delivery shown at 794 may occur before 783. In some examples, analytics server delivery shown at 794 may continue after 783.

For the online option 787, a charging data request 778 may be sent from MDA producer 750 to CHF 752 during the event. Optionally, at 788 a required number of charging units may be determined/negotiated with an MDAS consumer. The event and the amount of charging units for the event can then be sent at 789. At 790, CHF 752 may create at least one of an account, rating, control information for MDAS producer 750. AT 791, a CDR is created for the event for the MDAS producer. At 792, a charging data response is sent from CHF 752 to MDAS producer 750 with a number of granted charging units for the event. At 793 MDAS producer 750 may supervise the event to determine that the number of granted charging units is not exceeded. At 794, MDAS producer 750 may deliver the analytics service.

As discussed above, charging data requests and responses may be sent between an MDAS producer 750 and CHF 752 to open, update, and close a CDR. The requests and responses may be sent via an MDAS interface between the MDAS producer and the CHF and also via a CEF. This provides an efficient and secure method for managing charging data for events and session based MDA.

Examples of information elements that may be included in a charging data request or a charging data response are shown in Table 1. It should be noted not all information elements of Table 1 need to be included in each charging data request or a charging data response.

**Table 1: The data structure common to operations in response semantics.**

| **Information Element** | | | **Converged Charging Category** | **Offline Only Charging Category** | **Description** |
|---|---|---|---|---|---|
| Session Identifier | | | O_{c} | O_{c} | This field identifies the charging session. |
| Subscriber Identifier | | | O_{M} | O_{M} | This field contains the identification of the individual subscriber that uses the requested service. |
| NF Consumer Identification | | | M | M | This is a grouped field which contains a set of information identifying the NF consumer of the charging service. |
| | NF Functionality | | M | M | This field contains the function of the |
| | NF Name | | O_{c} | O_{c} | This fields holds the name (i.e. UUID) of the NF consumer. At least one of the NF Address or NF Name shall be present. |
| | NF Address | | O_{c} | O_{c} | This field holds the address (i.e. IP address and/or FQDN) of NF consumer. At least one of the NF Address or NF Name shall be present. |
| | NF PLMN ID | | O_{c} | O_{c} | This field holds the PLMN ID of the network the NF consumer belongs to. |
| Type of MDA Service | | | M | M | This field holds the name or identity of the analytics. |
| AI/ML Model | | | M | M | This field holds the name or identity of the AI/ML learning model. |
| Type of MDA Result | | | M | M | This filed refers to the type of MDA result, it can be (i) a numeric result, i.e., statistics or prediction, (ii) root cause analysis result or (iii) recommendation |
| MDA CPU usage | | | M | M | This field holds the CPU cycles needed to compute the request MDA result |
| MDA Memory usage | | | M | M | This field holds the memory needed to store the request MDA result |
| Input Data | | | M | M | This field holds size of the input data needed to compute the request MDA result |
| Size of MDA Report | | | M | M | This field holds size of the input data needed to compute the request MDA result |
| MDA Reporting Method | | | M | M | This field represent the type of reporting |
| MDA Conditions | | | O | O | Correlated input that can be used for more accurate rating group or for quota granting |
| Offline or online | | | M | M | This field indicate that the MDA output is related to offline or online charging. |
| MDA Real-time Reporting | | | O_{M} | O_{M} | This field indicate that the MDA output is related to real-time reporting |
| MDA Near real-time Reporting | | | O_{M} | O_{M} | This field indicate that the MDA output is related to near real-time reporting. |
| MDA Non real-time Reporting | | | O_{M} | O_{M} | This field indicate that the MDA output is related to non real-time reporting. |
| Input Data Source Recording | | | O | O | This filed indicates the option of monitoring the data sources used as input to the AI/ML model in case of a fault to enable backtracking for root cause analysis. |
| AI/ML Training Request | | | M | M | This field indicates the training or re-training request from an MDA MnS consumer for the AI/ML model that is used. |
| Charging Identifier | | | O_{M} | - | This field contains the charging identifier allowing correlation of charging information. Only applicable if not provided in the NF (CTF) consumer specific structure. |
| Invocation Timestamp | | | M | M | This field holds the timestamp of the charging service invocation by the NF consumer |
| Invocation Sequence Number | | | M | M | This field contains the sequence number of the charging service invocation by the NF consumer in a charging session. |
| Retransmission Indicator | | | O_{c} | O_{c} | This field indicates if included, this is a retransmitted request message. |
| One-time Event | | | O_{c} | - | This field indicates, if included, that this is event based charging and whether this is a one-time event in that there will be no update or termination. |
| One-time Event Type | | | O_{c} | - | This field indicated the type of the one time event, i.e. Immediate or Post event charging. |
| Notify URI | | | O_{c} | - | This field contains URI to which notifications are sent by the CHF. The latest received value shall always be used at notifications. |
| Supported Features | | | O_{c} | - | This field indicates the features supported by the NF consumer. |
| Service Specification Information | | | O_{c} | - | This field identifies the technical specification for the service (e.g. TS 32.255) and release version (e.g. Release 16) that applies to the request. It is for information. |
| Triggers | | | O_{c} | O_{c} | This field identifies the event(s) triggering the request and is common to all Multiple Unit Usage occurrences. |
| Multiple Unit Usage | | | O_{c} | O_{c} | This field contains the parameters for the quota management request and/or usage reporting. It may have multiple occurrences. |
| | Rating Group | | M | M | This field holds the identifier of a rating group. |
| | Requested Unit | | O_{c} | - | This field indicates, if included, that quota management is required. It may additionally contain the amount of requested service units for a particular category. |
| | | Time | O_{c} | - | This field holds the amount of requested time. |
| | | Total Volume | O_{c} | - | This field holds the amount of requested volume in both uplink and downlink directions. |
| | | Uplink Volume | O_{c} | - | This field holds the amount of requested volume in uplink direction. |
| | | Downlink Volume | O_{c} | - | This field holds the amount of requested volume in downlink direction. |
| | | Service Specific Units | O_{c} | - | This field holds the amount of requested service specific units. |
| | Used Unit Container | | O_{c} | O_{c} | This field contains the amount of used non-monetary service units measured up to the triggers and trigger timestamp. It may have multiple occurrences. |
| | | Service Identifier | O_{c} | O_{c} | This field holds the Service Identifier. |
| | | Quota management Indicator | O_{c} | - | This field holds an indicator on whether the reported used units are with quota management control, without quota management control or with quota management control temporary suspended. If the field is not present, it indicates the used unit is without quota management applied. |
| | | Triggers | O_{c} | O_{c} | This field holds reason for charging information reporting or closing for the used unit container. |
| | | Trigger Timestamp | O_{c} | O_{c} | This field holds the timestamp of the trigger. |
| | | Time | O_{c} | O_{c} | This field holds the amount of used time. |
| | | Total Volume | O_{c} | O_{c} | This field holds the amount of used volume in both uplink and downlink directions. |
| | | Uplink Volume | O_{c} | O_{c} | This field holds the amount of used volume in uplink direction. |
| | | Downlink Volume | O_{c} | O_{c} | This field holds the amount of used volume in downlink direction. |
| | | Service Specific Unit | O_{c} | O_{c} | This field holds the amount of used service specific units. |
| | | Event Time Stamps | O_{c} | O_{c} | This field holds the timestamps of the event reported in the Service Specific Units, if the reported units are event based. |
| | | Local Sequence Number | O_{M} | O_{M} | This field holds the container sequence number. |

As shown in Table 1, an indication of an AI/ML model used for an MDAS procedure may be included as an information element in a charging data request or charging data response.

As shown in Table 1, a size of an MDA report needed to complete a requested MDA result may be included as an information element in a charging data request or charging data response.

As shown in Table 1, an MDA conditions information element included as an information element in a charging data request or charging data response. The MDA conditions element may indicate a rating group or quota granting.

As shown in Table 1, an information element indicating whether the MDA output is related to offline or online charging may be included element in a charging data request or charging data response. This may be used to distinguish between, for example, the options shown at 783 and 787 of Figure 7,

As shown in Table 1, an information element in the charging data request or response may indicate that the MDA output is related to real-time reporting. An information element in the charging data request or response may indicate that the MDA output is related to near real-time reporting. An information element in the charging data request or response may indicate that the MDA output is related to non-real-time reporting.

As shown in Table 1, an information element in the charging data request or response may indicate that an option is available to the MDAS consumer to monitor the data sources used as input to the AI/ML model in case of a fault to enable backtracking for root cause analysis.

According to some examples, end-to-end analytics charging can be provided in a 5G network.

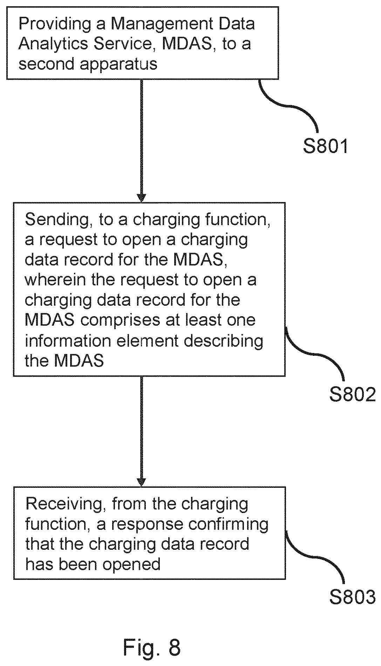

Figure 8 shows an example method flow performed by an apparatus. The apparatus may be comprised within a network function. In an example, the network function may be a MDAS Producer, e.g., MDAS Producer 750, 650, 535.

In S801, the method comprises: providing a MDAS to a second apparatus. The second apparatus may comprise, for example, MDAS consumer.

In S802, the method comprises: sending to a charging function, a request to open a charging data record for the MDAS, wherein the request to open a charging data record for the MDAS comprises at least one information element describing the MDAS.

In S803, the method comprises: receiving, from the charging function, a response confirming that the charging data record has been opened.

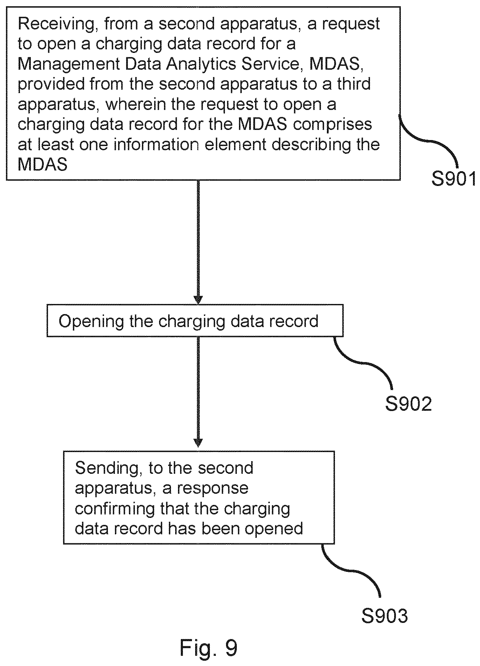

Figure 9 shows an example method flow performed by an apparatus. The apparatus may be comprised within a network function. In an example, the apparatus may be comprised within a CHF such as CHF 752, 523.

In S901, the method comprises receiving, from a second apparatus, a request to open a charging data record for a Management Data Analytics Service, MDAS, provided from the second apparatus to a third apparatus, wherein the request to open a charging data record for the MDAS comprises at least one information element describing the MDAS. The second apparatus may comprise an MDAS producer. The third apparatus may comprise a MDAS consumer.

In S902, the method comprises opening the charging data record.

In S903, the method comprises to the second apparatus, a response confirming that the charging data record has been opened.

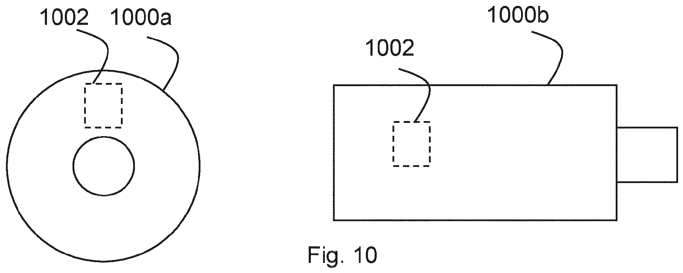

Figure 10 shows a schematic representation of non-volatile memory media 1000a (e.g. computer disc (CD) or digital versatile disc (DVD)) and 1000b (e.g. universal serial bus (USB) memory stick) storing instructions and/or parameters 1002 which when executed by a processor allow the processor to perform one or more of the steps of the above-described methods.

It is noted that while the above describes example embodiments, there are several variations and modifications which may be made to the disclosed solution without departing from the scope of the present invention.

The examples may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The examples may be implemented by computer software stored in a memory and executable by at least one data processor of the involved entities or by hardware, or by a combination of software and hardware. Further in this regard it should be noted that any procedures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general-purpose computers, special purpose computers, microprocessors, digital signal processors (DSPs), application specific integrated circuits (ASIC), gate level circuits and processors based on multi core processor architecture, as non-limiting examples.

Alternatively, or additionally some examples may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments. However, various modifications and adaptations may become apparent to those skilled in the relevant arts in view of the foregoing description, when read in conjunction with the accompanying drawings and the appended claims.

## Claims

1. An apparatus comprising a Management Data Analytics Service, MDAS, producer (750), the apparatus comprising means for:
providing a MDAS to a MDAS consumer (537);
sending, to a charging function (752), a request to open a charging data record for the MDAS, wherein the request to open a charging data record for the MDAS comprises at least one information element describing the MDAS;
receiving, from the charging function (752), a response confirming that the charging data record has been opened.

2. An apparatus according to claim 1, wherein the at least one information element comprises an indication of at least one of: CPU usage; storage requirements; and memory size needed to provide a result of the MDAS to the MDAS consumer (537).

3. An apparatus according to claim 1 or claim 2, wherein the at least one information element comprises an indication of whether the charging data record is to be created after the MDAS is provided or while the MDAS is provided.

4. An apparatus according to any preceding claim, wherein the at least one information element comprises an indication of whether the MDAS is to provide an output to the MDAS consumer (537) in real-time, near real-time or not at real-time, or wherein the information element comprises an indication of the relative priority for producing an MDAS output.

5. An apparatus according to any preceding claim, wherein the at least one information element comprises an indication that the MDAS consumer (537) can monitor the data sources used to provide the MDAS.

6. An apparatus according to any preceding claim, wherein the at least one information element comprises an indication of at least one of: an Artificial Intelligence model used to provide the MDAS; a Machine Learning model used to provide the MDAS.

7. An apparatus according to any preceding claim, wherein the at least one information element comprises an indication of network conditions required for the MDAS to be provided.

8. An apparatus according to any preceding claim, wherein the at least one information element comprises an indication of the type of management data analytics used in the MDAS.

9. An apparatus according to any preceding claim, wherein the means are further configured to perform:
updating the MDAS by at least one of:
training an Artificial Intelligence model or a Machine Learning model used to provide the MDAS;
validating an Artificial Intelligence model or a Machine Learning model used to provide the MDAS.

10. An apparatus according to any preceding claim wherein the means are further for:
detecting a usage reporting trigger of the MDAS, and in response:
sending, to the charging function, a request for an update of the charging data record, wherein the request to open a charging data record for the MDAS comprises at least one further information element describing the MDAS;
receiving, from the charging function (752), a response confirming that the charging data record has been updated.

11. An apparatus according to any preceding claim, wherein the means are further for:
releasing the MDAS;
sending, to the charging function (752), a request to terminate the charging data record wherein the request to open a charging data record for the MDAS comprises at least one further information element describing the MDAS;
receiving, from the charging function (752), a response confirming that the charging data record has been terminated.

12. An apparatus according to any preceding claim, wherein the means are further for:
determining an amount of charging units to be used for the MDAS service;
sending, in the request to open the charging data record, an indication of the determined amount of charging units;
receiving, from the charging function (752), an indication that the charging data record is opened;
monitoring the MDAS;
terminating the MDAS before the determined amount of charging units is exceeded.

13. An apparatus according to any preceding claim, wherein the means are further configured to perform, prior to sending, to the charging function, a request to open the charging data record for the MDAS:
receiving, from a Charging Enablement Function, CEF (627), a request to subscribe to the MDAS;
sending, to the CEF (627) confirmation that the subscription is successful.

14. An apparatus comprising a charging function, CHF (752), the apparatus comprising means for:
receiving, from a Management Data Analytics Service, MDAS, producer (750), a request to open a charging data record for a Management Data Analytics Service, MDAS, provided from the MDAS producer (750) to a MDAS consumer (537), wherein the request to open a charging data record for the MDAS comprises at least one information element describing the MDAS;
opening the charging data record;
sending, to the MDAS producer (750), a response confirming that the charging data record has been opened.

15. An apparatus according to claim 14, wherein the at least one information element comprises at least one of:
an indication of at least one of CPU usage, storage requirements and memory size needed to provide a result of the MDAS to the MDAS producer (750);
an indication of whether the charging data record is to be created after the MDAS is provided or while the MDAS is provided;
an indication of whether the MDAS is to provide an output to the MDAS consumer (537) in real-time, near real-time or not at real-time;
an indication of the relative priority for producing an MDAS output
an indication that the MDAS consumer (537) can monitor the data sources used to provide the MDAS;
an indication of at least one of an Artificial Intelligence model used to provide the MDAS, a Machine Learning model used to provide the MDAS;
an indication of network conditions required for the MDAS to be provided;
an indication of the type of management data analytics used in the MDAS.

## Patentansprüche

1. Einrichtung, die einen Verwaltungsdatenanalysedienst(MDAS)-Erzeuger (750) umfasst, wobei die Einrichtung Mittel für Folgendes umfasst:
Bereitstellen eines MDAS für einen MDAS-Verbraucher (537);
Senden einer Anforderung zum Öffnen eines Abrechnungsdatensatzes für den MDAS an eine Abrechnungsfunktion (752), wobei die Anforderung zum Öffnen eines Abrechnungsdatensatzes für den MDAS mindestens ein Informationselement umfasst, das den MDAS beschreibt;
Empfangen einer Antwort, die bestätigt, dass der Abrechnungsdatensatz geöffnet wurde, von der Abrechnungsfunktion (752).

2. Einrichtung nach Anspruch 1, wobei das mindestens eine Informationselement eine Anzeige von mindestens einem von Folgendem umfasst: CPU-Nutzung; Speicheranforderungen; und einer Speichergröße, die zum Bereitstellen eines Ergebnisses des MDAS für den MDAS-Verbraucher (537) erforderlich ist.

3. Einrichtung nach Anspruch 1 oder Anspruch 2, wobei das mindestens eine Informationselement eine Anzeige dazu umfasst, ob der Abrechnungsdatensatz zu erstellen ist, nachdem der MDAS bereitgestellt wurde oder während der MDAS bereitgestellt wird.

4. Einrichtung nach einem der vorhergehenden Ansprüche, wobei das mindestens eine Informationselement eine Anzeige dazu umfasst, ob der MDAS eine Ausgabe für den MDAS-Verbraucher (537) in Echtzeit, nahe Echtzeit oder nicht in Echtzeit bereitstellen soll, oder wobei das Informationselement eine Anzeige der relativen Priorität zum Produzieren einer MDAS-Ausgabe umfasst.

5. Einrichtung nach einem der vorhergehenden Ansprüche, wobei das mindestens eine Informationselement eine Anzeige umfasst, dass der MDAS-Verbraucher (537) die zum Bereitstellen des MDAS verwendeten Datenquellen überwachen kann.

6. Einrichtung nach einem der vorhergehenden Ansprüche, wobei das mindestens eine Informationselement eine Anzeige von mindestens einem von Folgendem umfasst: einem künstlichen Intelligenzmodell, das zum Bereitstellen des MDAS verwendet wird; einem Maschinenlernmodell, das zum Bereitstellen des MDAS verwendet wird.

7. Einrichtung nach einem der vorhergehenden Ansprüche, wobei das mindestens eine Informationselement einer Anzeige von Netzwerkzuständen umfasst, die zum Bereitstellen des MDAS erforderlich sind.

8. Einrichtung nach einem der vorhergehenden Ansprüche, wobei das mindestens eine Informationselement einer Anzeige einer Art der beim MDAS verwendeten Verwaltungsdatenanalyse umfasst.

9. Einrichtung nach einem der vorhergehenden Ansprüche, wobei die Mittel ferner dazu ausgelegt sind, Folgendes durchzuführen:
Aktualisieren des MDAS durch mindestens eines von Folgendem:
Trainieren eines künstlichen Intelligenzmodells oder eines Maschinenlernmodells, die zum Bereitstellen des MDAS verwendet werden;
Validieren eines künstlichen Intelligenzmodells oder eines Maschinenlernmodells, die zum Bereitstellen des MDAS verwendet werden.

10. Einrichtung nach einem der vorhergehenden Ansprüche, wobei die Mittel ferner für Folgendes sind:
Detektieren eines Nutzungsmeldungsauslösers des MDAS und in Reaktion darauf:
Senden einer Anforderung einer Aktualisierung des Abrechnungsdatensatzes an die Abrechnungsfunktion, wobei die Anforderung zum Öffnen eines Abrechnungsdatensatzes für den MDAS mindestens ein weiteres Informationselement umfasst, das den MDAS beschreibt;
Empfangen einer Antwort, die bestätigt, dass der Abrechnungsdatensatz aktualisiert wurde, von der Abrechnungsfunktion (752).

11. Einrichtung nach einem der vorhergehenden Ansprüche, wobei die Mittel ferner für Folgendes sind:
Freigeben des MDAS;
Senden einer Anforderung zum Beenden des Abrechnungsdatensatzes an die Abrechnungsfunktion (752), wobei die Anforderung zum Öffnen eines Abrechnungsdatensatzes für den MDAS mindestens ein weiteres Informationselement umfasst, das den MDAS beschreibt;
Empfangen einer Antwort, die bestätigt, dass der Abrechnungsdatensatz beendet wurde, von der Abrechnungsfunktion (752).

12. Einrichtung nach einem der vorhergehenden Ansprüche, wobei die Mittel ferner für Folgendes sind:
Bestimmen einer Menge von Abrechnungseinheiten, die für den MDAS-Dienst zu verwenden sind;
Senden einer Anzeige der bestimmten Menge von Abrechnungseinheiten in der Anforderung zum Öffnen des Abrechnungsdatensatzes;
Empfangen einer Anzeige, dass der Abrechnungsdatensatz geöffnet wurde, von der Abrechnungsfunktion (752);
Überwachen des MDAS;
Beenden des MDAS, bevor die bestimmte Menge von Abrechnungseinheiten überschritten wird.

13. Einrichtung nach einem der vorhergehenden Ansprüche, wobei die Mittel vor dem Senden einer Anforderung zum Öffnen des Abrechnungsdatensatzes für den MDAS an die Abrechnungsfunktion ferner dazu ausgelegt sind, Folgendes durchzuführen:
Empfangen einer Anforderung zum Abonnieren des MDAS von einer Abrechnungsaktivierungsfunktion, CEF (627);
Senden einer Bestätigung, dass das Abonnement erfolgreich war, an die CEF (627).

14. Einrichtung, die eine Abrechnungsfunktion, CHF (752), umfasst, wobei die Einrichtung Mittel für Folgendes umfasst:
Empfangen einer Anforderung zum Öffnen eines Abrechnungsdatensatzes für einen Verwaltungsdatenanalysedienst, MDAS, der vom MDAS-Erzeuger (750) für einen MDAS-Verbraucher (537) bereitgestellt wird, von einem Verwaltungsdatenanalysedienst(MDAS)-Erzeuger (750), wobei die Anforderung zum Öffnen eines Abrechnungsdatensatzes für den MDAS mindestens ein Informationselement umfasst, das den MDAS beschreibt;
Öffnen des Abrechnungsdatensatzes;
Senden einer Antwort, die bestätigt, dass der Abrechnungsdatensatz geöffnet wurde, an den MDAS-Erzeuger (750).

15. Einrichtung nach Anspruch 14, wobei das mindestens eine Informationselement mindestens eines von Folgendem umfasst:
einer Anzeige von mindestens einem von CPU-Nutzung; Speicheranforderungen und einer Speichergröße, die zum Bereitstellen eines Ergebnisses des MDAS für den MDAS-Erzeuger (750) erforderlich ist.
einer Anzeige dazu, ob der Abrechnungsdatensatz zu erstellen ist, nachdem der MDAS bereitgestellt wurde oder während der MDAS bereitgestellt wird;
einer Anzeige dazu, ob der MDAS eine Ausgabe für den MDAS-Verbraucher (537) in Echtzeit, nahe Echtzeit oder nicht in Echtzeit bereitstellen soll;
einer Anzeige der relativen Priorität zum Produzieren einer MDAS-Ausgabe
einer Anzeige, dass der MDAS-Verbraucher (537) die zum Bereitstellen des MDAS verwendeten Datenquellen überwachen kann;
einer Anzeige von mindestens einem von einem künstlichen Intelligenzmodell, das zum Bereitstellen des MDAS verwendet wird, einem Maschinenlernmodell, das zum Bereitstellen des MDAS verwendet wird;
einer Anzeige von Netzwerkzuständen, die zum Bereitstellen des MDAS erforderlich sind;
einer Anzeige der Art der beim MDAS verwendeten Verwaltungsdatenanalyse.

## Revendications

1. Appareil comprenant un producteur de service d'analyse de données de gestion, MDAS, (750), l'appareil comprenant des moyens pour :
fournir un MDAS à un consommateur de MDAS (537) ;
envoyer à une fonction de facturation (752) une demande d'ouvrir un enregistrement de données de facturation pour le MDAS, dans lequel la demande d'ouvrir un enregistrement de données de facturation pour le MDAS comprend au moins un élément d'information décrivant le MDAS ;
recevoir de la fonction de facturation (752) une réponse confirmant que l'enregistrement de données de facturation a été ouvert.

2. Appareil selon la revendication 1, dans lequel l'au moins un élément d'information comprend une indication : d'une utilisation de CPU ; et/ou d'exigences de stockage ; et/ou d'une taille de mémoire nécessaire pour fournir un résultat du MDAS au consommateur de MDAS (537).

3. Appareil selon la revendication 1 ou la revendication 2, dans lequel l'au moins un élément d'information comprend une indication précisant si l'enregistrement de données de facturation doit être créé après la fourniture du MDAS ou pendant la fourniture du MDAS.

4. Appareil selon l'une des revendications précédentes, dans lequel l'au moins un élément d'information comprend une indication précisant si le MDAS doit fournir une sortie au consommateur de MDAS (537) en temps réel, en temps quasi réel ou pas en temps réel, ou dans lequel l'élément d'information comprend une indication de la priorité relative pour produire une sortie MDAS.

5. Appareil selon l'une des revendications précédentes, dans lequel l'au moins un élément d'information comprend une indication selon laquelle le consommateur de MDAS (537) peut surveiller les sources de données utilisées pour fournir le MDAS.

6. Appareil selon l'une des revendications précédentes, dans lequel l'au moins un élément d'information comprend une indication d'un modèle d'intelligence artificielle utilisé pour fournir le MDAS et/ou d'un modèle d'apprentissage machine utilisé pour fournir le MDAS.

7. Appareil selon l'une des revendications précédentes, dans lequel l'au moins un élément d'information comprend une indication de conditions réseau requises pour que le MDAS soit fourni.

8. Appareil selon l'une des revendications précédentes, dans lequel l'au moins un élément d'information comprend une indication du type de l'analyse de données de gestion utilisée dans le MDAS.

9. Appareil selon l'une des revendications précédentes, dans lequel les moyens sont en outre configurés pour :
mettre à jour le MDAS en effectuant au moins l'une des opérations suivantes :
entraîner un modèle d'intelligence artificielle ou un modèle d'apprentissage machine utilisé pour fournir le MDAS ;
valider un modèle d'intelligence artificielle ou un modèle d'apprentissage machine utilisé pour fournir le MDAS.

10. Appareil selon l'une des revendications précédentes, dans lequel les moyens sont en outre destinés à :
détecter un déclencheur de rapport d'utilisation du MDAS, et en réponse :
envoyer à la fonction de facturation une demande de mettre à jour de l'enregistrement de données de facturation, dans lequel la demande d'ouvrir un enregistrement de données de facturation pour le MDAS comprend au moins un élément d'information supplémentaire décrivant le MDAS ;
recevoir de la fonction de facturation (752) une réponse confirmant que l'enregistrement de données de facturation a été mis à jour.

11. Appareil selon l'une des revendications précédentes, dans lequel les moyens sont en outre destinés à :
libérer le MDAS ;
envoyer à la fonction de facturation (752) une demande de mettre fin à l'enregistrement de données de facturation, dans lequel la demande d'ouvrir un enregistrement de données de facturation pour le MDAS comprend au moins un élément d'information supplémentaire décrivant le MDAS ;
recevoir de la fonction de facturation (752) une réponse confirmant que l'enregistrement de données de facturation a pris fin.

12. Appareil selon l'une des revendications précédentes, dans lequel les moyens sont en outre destinés à :
déterminer une quantité d'unités de facturation à utiliser pour le service MDAS ;
envoyer dans la demande d'ouvrir l'enregistrement de données de facturation une indication de la quantité d'unités de facturation déterminée ;
recevoir de la fonction de facturation (752) une indication selon laquelle l'enregistrement de données de facturation est ouvert ;
surveiller le MDAS ;
mettre fin au MDAS avant que la quantité d'unités de facturation déterminée ne soit dépassée.

13. Appareil selon l'une des revendications précédentes, dans lequel les moyens sont en outre configurés pour, avant d'envoyer à la fonction de facturation une demande d'ouvrir l'enregistrement de données de facturation pour le MDAS :
recevoir d'une fonction d'activation de facturation, CEF, (627), une demande d'abonnement au MDAS ;
envoyer à la CEF (627) une confirmation que l'abonnement a été effectué avec succès.

14. Appareil comprenant une fonction de facturation, CHF, (752), l'appareil comprenant des moyens pour :
recevoir d'un producteur de service d'analyse de données de gestion, MDAS, (750) une demande d'ouvrir un enregistrement de données de facturation pour un service d'analyse de données de gestion, MDAS, fourni par le producteur de MDAS (750) à un consommateur de MDAS (537), dans lequel la demande d'ouvrir un enregistrement de données de facturation pour le MDAS comprend au moins un élément d'information décrivant le MDAS ;
ouvrir l'enregistrement de données de facturation ;
envoyer au producteur de MDAS (750) une réponse confirmant que l'enregistrement de données de facturation a été ouvert.

15. Appareil selon la revendication 14, dans lequel l'au moins un élément d'information comprend au moins une parmi :
une indication d'une utilisation de CPU, d'exigences de stockage et/ou d'une taille de mémoire nécessaire pour fournir un résultat du MDAS au producteur de MDAS (750) ;
une indication précisant si l'enregistrement de données de facturation doit être créé après la fourniture du MDAS ou pendant la fourniture du MDAS ;
une indication précisant si le MDAS doit fournir une sortie au consommateur de MDAS (537) en temps réel, en temps quasi réel ou pas en temps réel ;
une indication de la priorité relative pour produire une sortie MDAS ;
une indication selon laquelle le consommateur de MDAS (537) peut surveiller les sources de données utilisées pour fournir le MDAS ;
une indication d'un modèle d'intelligence artificielle utilisé pour fournir le MDAS et/ou d'un modèle d'apprentissage machine utilisé pour fournir le MDAS ;
une indication de conditions réseau requises pour que le MDAS soit fourni ;
une indication du type de l'analyse de données de gestion utilisée dans le MDAS.
